Europäisches Patentamt

European Patent Office

Office européen des brevets

(11) Veröffentlichungsnummer: **0 340 467**
**A2**

(12) **EUROPÄISCHE PATENTANMELDUNG**

(21) Anmeldenummer: 89106000.6

(51) Int. Cl.⁴: **B27G 19/04**

(22) Anmeldetag: 06.04.89

(30) Priorität: 05.05.88 DE 3815245

(43) Veröffentlichungstag der Anmeldung:
08.11.89 Patentblatt 89/45

(84) Benannte Vertragsstaaten:
CH DE FR GB LI

(71) Anmelder: ROBERT BOSCH GMBH
Postfach 10 60 50
D-7000 Stuttgart 10(DE)

(72) Erfinder: Reibetanz, Wilbert, Ing.
Gutastrasse 10
D-7022 Leinfelden-Echterdingen 1(DE)
Erfinder: Wanner, Karl, Dr. Dr. Ing.
Moltkestrasse 10
D-7022 Leinfelden-Echterdingen 2(DE)
Erfinder: Baumann, Otto, Techn.
Weingartenstrasse 24
D-7022 Leinfelden-Echterdingen 2(DE)
Erfinder: Müller, Rolf, Dipl.-Ing.
Manosquerstrasse 21
D-7022 Leinfelden-Echterdingen 2(DE)
Erfinder: Schemel, Peter, Ing.
Narzissenstrasse 39
D-7022 Leinfelden-Echterdingen(DE)

(54) Sicherheitseinrichtung an einer Handwerkzeugmaschine.

(57) Bei Handwerkzeugmaschinen mit schnelldrehenden, durch einen Durchbruch in der Fußplatte hindurchtauchenden Werkzeugen verhindert nur die Kraft einer Rückstellfeder das unbeabsichtigte Hindurchtauchen des Werkzeugs, was die potentielle Gefährdung der Bedienungsperson durch das Werkzeug nur begrenzt verringert.

Eine separat zu lösende Sperrvorrichtung (Sperrklinke 40) verhindert das unbeabsichtigte Hindurchtauchen des Werkzeugs (14) durch den Durchbruch; eine zweite Sperrvorrichtung (Sperrschieber 44) verhindert das unbeabsichtigte, jedoch zum Werkzeugwechsel notwendige Aufklappen der Haube (16).

Verwendbar bei allen nach dem Tauchsägenprinzip zustellenden Handwerkzeugmaschinen.

FIG. 1

## Sicherheitseinrichtung an einer Handwerkzeugmaschine

### Stand der Technik

Die Erfindung geht aus von einer Handwerkzeugmaschine nach der Gattung des Hauptanspruchs. Es ist schon eine Nutfräse bekannt (siehe z.B. DE-PS 25 47 459), bei der das Werkzeug durch einen Durchbruch in der Fußplatte hindurch gegen Federkraft in ein Werkstück drückbar ist. Diese nach dem sogenannten Tauchsägenprinzip zustellenden Kreissägen sind potentiell gefährlich, weil nur die Kraft der Feder das Werkzeug bei Nichtgebrauch hinter der Fußplatte hält. Beim schnellen Ablegen der Maschine kann das Werkzeug unbeabsichtigt durch die Fußplatte hindurchtreten. Durch das mit hoher Drehzahl umlaufende scharfe Werkzeug kann es dabei zu Verletzungen der Bedienungsperson kommen.

Aufgabe der Erfindung ist es, diesem Übelstand abzuhelfen und die Sicherheit bei der Arbeit mit diesen Handwerkzeugmaschinen zu erhöhen.

### Vorteile der Erfindung

Die erfindungsgemäße Handwerkzeugmaschine mit den kennzeichnenden Merkmalen des Hauptanspruchs hat gegenüber dem Stand der Technik den Vorteil, daß ein unbeabsichtigtes Hindurchtauchen des Werkzeugs durch die Fußplatte nicht mehr möglich ist. Die von der Maschine ausgehende Verletzungsgefahr ist damit weitgehend gebannt. Die Handhabung der Maschine wird damit so sicher, wie man es von einer Maschine mit umkapseltem Werkzeug erwarten darf.

Durch die in den Unteransprüchen aufgeführten Maßnahmen sind vorteilhafte Weiterbildungen und Verbesserungen der im Hauptanspruch angegebenen Handwerkzeugmaschine möglich. Besonders vorteilhaft ist es, einen als Reiter ausgebildeten Tiefenanschlag einzusetzen. Dies ermöglicht eine leicht zu bedienende und trotzdem kostengünstig zu realisierende Einstellung der Tiefe einer zu fräsenden Nut.

### Zeichnung

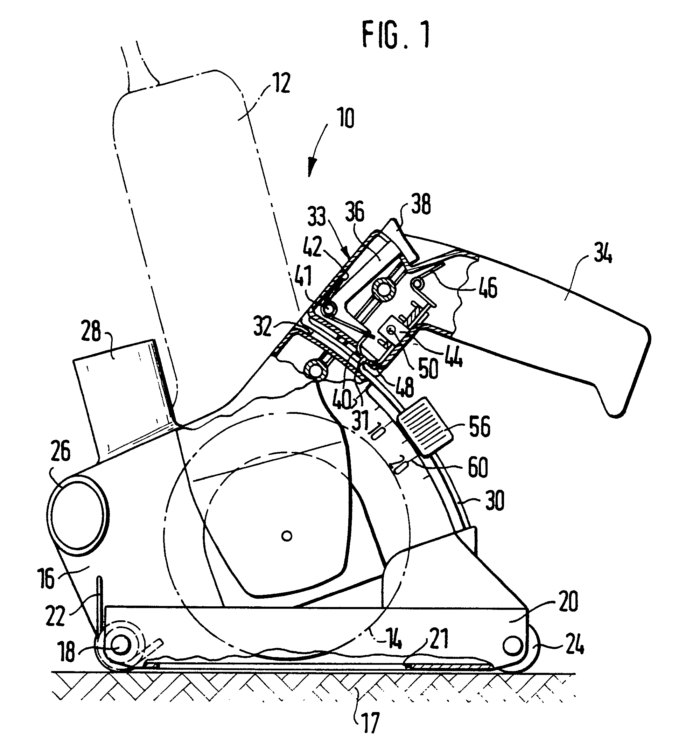

Ein Ausführungsbeispiel der Erfindung ist in der Zeichnung dargestellt und in der nachfolgenden Beschreibung näher erläutert. Es zeigen Figur 1 eine teilweise aufgebrochene Seitenansicht einer Nutfräse mit einer Sicherheitseinrichtung gemäß der Erfindung, Figur 2 die gleiche Nutfräse mit ausgeschwenktem Werkzeug, Figuren 3 und 4 Einzelheiten des verstellbaren Tiefenanschlags im Schnitt bzw. in teilweise aufgebrochener Darstellung, die Figuren 5 und 6 verschiedene Betriebszustände der Sicherung, Figur 7 das Ansetzen eines Schlüssels an die erfindungsgemäße Sicherheitseinrichtung.

### Beschreibung des Ausführungsbeispiels

Eine an sich bekannte Nutfräse 10 hat ein gleichzeitig als Handhabe dienendes Gehäuse 12, das einen vorzugsweise elektrischen Antriebsmotor enthält. Über ein Winkelgetriebe treibt der Motor ein kreisförmiges Werkzeug 14, wie etwa ein Sägeblatt oder eine Trennscheibe, an.

Das Werkzeug 14 ist von einer Haube 16 umgeben, die mit dem Gehäuse 12 verbunden ist. Nach unten, d.h. in Richtung auf das Werkstück 17 hin, ist über ein Drehlager 18 eine Fußplatte 20 mit einem Durchbruch 21 für das Werkzeug 14 an der Haube 16 in bekannter Weise angelenkt. Eine hier vorteilhafterweise um die Achse des Drehlagers 18 herum geschlungene Schenkelfeder 22 stützt sich einerseits an der Haube 16, andererseits an der Fußplatte 20 ab und drückt die Fußplatte 20 gegen das Werkstück 17 bzw. die Haube 16 vom Werkstück weg. Bei der auf ein Werkstück 17 aufgesetzten, nicht von Handkräften beeinflußten Nutfräse 10 ist das Werkzeug 14 hinter die Fußplatte 20 zurückgeschwenkt und vollständig verdeckt.

An der Fußplatte 20 angebrachte Fahrrollen 24 erleichtern das Verschieben der Nutfräse 10 und schonen die Werkstückoberfläche. An der Haube 16 ist ein Handgriff 26 und ein Saugstutzen 28 zum Absaugen von Spänen oder dgl. angeordnet.

Auf der dem Drehlager 18 gegenüberliegenden Seite ist eine Schiene 30 mit ihrem einen Ende an der Fußplatte 20 befestigt. Die Schiene 30 weist im wesentlichen vom Werkstück 17 weg und ist in bezug auf die Achse des Drehlagers 18 konkav gekrümmt. Am anderen freien Ende 31 ist die Schiene 30 etwa hakenförmig gebogen, sie läuft durch einen Führungskanal 32, der im Ansatzstück 33 eines an der Haube 16 angebrachten zweiten Handgriffs 34 schwenkbar angeordnet ist. Der Handgriff 34 trägt im Innern seines Ansatzstückes einen im wesentlichen L-förmig gestalteten Kipphebel 36, dessen eines Ende als Schiebetaste 38 an der Außenseite des Handgriffs 34 betätigbar ist. Das andere Ende des Kipphebels 36 ist als angeschrägte Sperrklinke 40 ausgebildet. Etwa am Kreuzungspunkt der Schenkel des Kipphebels 36 ist dieser mittels einer Feder 42 an einer Achse 41 so angelenkt, daß die Sperrklinke 40 in den Führungskanal 32 hineinragt, wenn die Schiebetaste 38 nicht betätigt wird.

Im Handgriff 34 ist noch eine zweite Sperreinrichtung angeordnet. Dies ist der Sperrschieber 44, der im Innern des Handgriffs 34 geführt ist und dessen ebenfalls abgeschrägte Sperrklinke 48 mit Hilfe einer Feder 46 in den Führungskanal 32 gedrückt wird. Eine Ausnehmung 50 im Sperrschieber 44 ist zum Betätigen desselben in später erläuterter Weise vorgesehen.

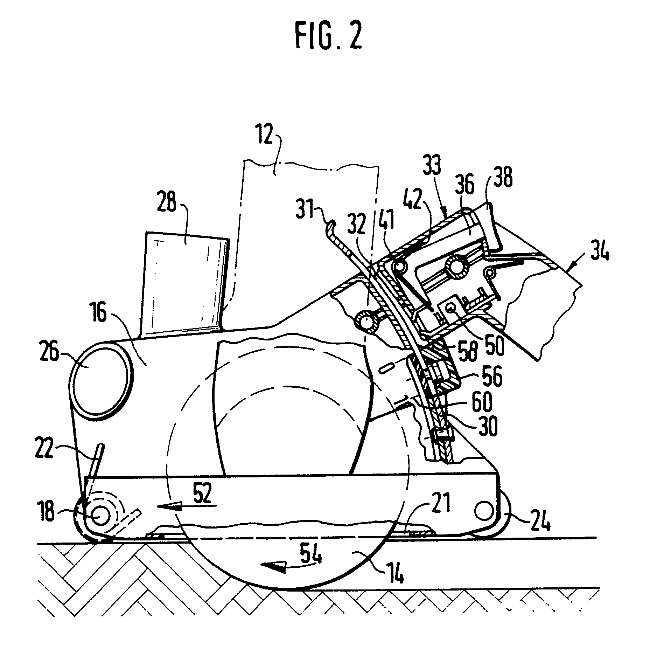

In Figur 2 ist die Nutfräse 10 in Arbeitsposition mit in das Werkstück 17 zugestelltem Werkzeug 14 zu sehen, wobei Pfeile die Vorschubrichtung 52 und die Umdrehungsrichtung 54 des Werkzeugs 14 andeuten. In dieser Position tritt das hakenförmig umgebogene Ende 31 der Schiene 30 aus dem Führungskanal 32 nach oben hinaus. Die Zustelltiefe wird begrenzt durch einen nachfolgend näher beschriebenen, auf der Schiene 30 aufsitzenden Reiter 56, der an einer Anschlagfläche 58 an der Unterseite des Ansatzstückes 33 des Handgriffs 34 anschlägt.

Auf einem der Schiene benachbarten Bereich der Haube 16 ist eine Skala 60 aufgetragen, an der die zugestellte Nuttiefe bzw. die mit dem Reiter 56 vorgewählte Zustelltiefe abgelesen werden kann.

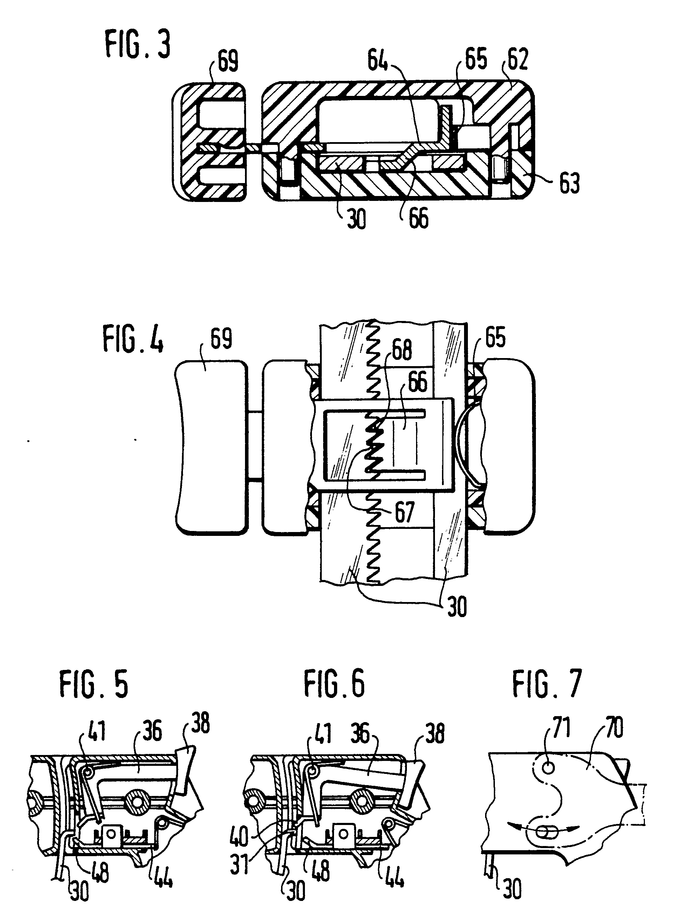

Figur 3 zeigt einen Schnitt durch den Reiter 56. Der Reiter besteht aus zwei vorzugsweise aus Kunststoff gefertigten Teilen 62 und 63 die einen gebogenen Schieber 64 und eine Blattfeder 65 aufnehmen. Der Schieber 64 ragt mit einem Ende aus dem Reiter 56 heraus, an dem er einen Druckknopf 69 trägt, mit dem der Schieber 64 gegen die Kraft der Feder 65 verschoben werden kann. Der Reiter 56 hat außerdem eine Durchbrechung, durch die die Schiene 30 verläuft. Letztere ist in ihrem mittleren Bereich der Länge nach zweigeteilt, wobei die Innenflanke des einen Teils ein als Rasteinrichtung 67 dienendes Sägezahnprofil aufweist. Eine an ihrem Ende ebenfalls mit Sägezahnprofil versehene, abgebogene Lasche 66 des Schiebers 64 fungiert als Gegenraste 68, wirkt also mit dem Sägezahnprofil der Schiene 30 derart zusammen, daß der Reiter nur bei Druck auf den Knopf 65 längst der Schiene 30 verschiebbar ist. Die bei der Positionierung des Reiters 56 ineinanderrastende Sägeverzahnung ist in Figur 4 gut zu erkennen; sie ist so angeordnet, daß die waagerecht liegenden Flanken die Andruckkraft beim Arbeiten mit der Nutfräse 10 aufnehmen, ohne daß dabei der Reiter 56 auf der Schiene 30 verrutscht.

Die Funktion der erfindungsgemäßen Sicherheitseinrichtung wird aus den nachfolgenden Figuren deutlich. In Figur 5 ist gezeigt, wie das Sperrmittel nach Betätigung der Schiebetaste 38 das hakenförmige Ende 31 der Schiene 30 freigibt. Die den Kipphebel 36 bedienende Hand kann nun mittels des Handgriffes 34 durch Niederdrücken das Werkzeug 14 in das Werkstück 17 hinein zustellen. Zum Wiedereinrasten des hakenförmigen Endes 31 der Schiene 30 nach Beendigung des Arbeitsganges ist es dabei nicht nötig, die Schiebetaste 38 erneut zu betätigen, da die Sperrklinke 40 so angeschrägt ist; daß das Ende 31 der Schiene 30 selbsttätig zwischen Sperrklinke 40 und der Sperrklinke 48 des Sperrschiebers 44 einrastet. Nur durch erneute Betätigung der Schiebetaste 38 kann das Werkzeug 14 wieder in Richtung auf das Werkstück 17 zugestellt werden. Da die Schiebetaste 38 nach oben (d.h. vom Werkstück 17 weg) betätigt werden muß, die am Handgriff 34 eingeleitete Zustellbewegung jedoch nach unten erfolgt, ist durch diese Anordnung eine gute Absicherung gegen unbeabsichtigtes Ausfahren des Werkzeugs 14 aus der es umgebenden Haube 16 bzw. über die Fußplatte 20 hinaus gegeben.

In Figur 6 ist der Sperrschieber 44 in zurückgeschobener Position dargestellt. Nun gibt die Sperrklinke 48 das Ende 31 der Schiene 30 nach der anderen Richtung hin frei. Dies ist dann notwendig, wenn das Werkzeug 14 beispielsweise zum Auswechseln zugänglich gemacht werden soll. Um eine unbeabsichtigte Betätigung des Sperrschiebers 44 während des normalen Betriebes zu verhindern, läßt sich der Sperrschieber 44 nur mit einem Werkzeug betätigen. Im Ausführungsbeispiel ist dies zweckmäßigerweise der zum Werkzeugwechsel ohnehin benötigte Stirnloch-Zapfenschlüssel 70, der in in Figur 7 dargestellter Weise außen am Ansatzstück des Handgriffes 34 angesetzt wird und durch eine längliche Ausnehmung an der Außenseite des Handgriffes 34 hindurch in die Ausnehmung 50 am Sperrschieber eingreift, wobei sich der zweite Zapfen des Stirnloch-Zapfenschlüssels 70 in einer im entsprechenden Abstand angebrachten Ausnehmung 71 am Ansatzstück 33 abstützt.

Beim Wiederheranschwenken der Fußplatte 20 an die Haube 16 schnappt das Ende 31 der Schiene 30 selbsttätig hinter der Sperrklinke 48 ein, weil letztere ebenfalls angeschrägt ist. Für die Entriegelung des Sperrschiebers 44 sind auch andere Mechanismen denkbar wie z.B. eine gegen eine Feder eindrückbare Drehscheibe, die auf den Sperrschieber 44 wirkt.

**Ansprüche**

1. Handwerkzeugmaschine, vorzugsweise Nutfräse, mit einem motorisch angetriebenen Werkzeug, insbesondere Trennscheibe, mit in Arbeitsposition horizontaler Achse, das in einem haubenartigen Gehäuse angeordnet und gegen die Kraft einer Feder längs eines Führungsmittels über eine Fußplatte (20) hinaus in Richtung auf das Werkstück (17) zustellbar ist, dadurch gekennzeichnet, daß die Zustellbewegung von einem gesondert betätigbaren Sperrmittel (Sperrklinke 40) freigebbar ist.

2. Handwerkzeugmaschine nach Anspruch 1, dadurch gekennzeichnet, daß das Führungsmittel als Schiene (30) ausgebildet ist, die mit ihrem einen Ende an der Fußplatte (20) befestigt ist.

3. Handwerkzeugmaschine nach Anspruch 1 oder 2, dadurch gekennzeichnet, daß die Fußplatte (20) gegenüber der Haube (16) bewegbar angeordnet ist.

4. Handwerkzeugmaschine nach Anspruch 3, dadurch gekennzeichnet, daß die Bewegbarkeit der Fußplatte (20) gegenüber der Haube (16) über ein Drehlager (18) realisiert ist, dessen Achse im wesentlichen parallel zur Werkzeugachse verläuft und das auf der dem Sperrmittel (Sperrklinke 40) gegenüberliegenden Seite des Werkzeugs (14) angeordnet ist.

5. Handwerkzeugmaschine nach Anspruch 2, dadurch gekennzeichnet, daß die Schiene (30) eine Krümmung aufweist, deren Zentrum zumindest annähernd in der Achse des Drehlagers (18) liegt.

6. Handwerkzeugmaschine nach mindestens einem der Ansprüche 2 bis 5, dadurch gekennzeichnet, daß die Schiene (30) zumindest teilweise parallel zu einer Außenkante der das Werkzeug umgebenden Haube (16) verläuft.

7. Handwerkzeugmaschine nach mindestens einem der Ansprüche 2 bis 6, dadurch gekennzeichnet, daß an dem der Schiene (30) benachbarten Bereich der Haube (16) eine Skala (60) aufgetragen ist.

8. Handwerkzeugmaschine nach mindestens einem der Ansprüche 2 bis 7, dadurch gekennzeichnet, daß die Schiene (30) einen als verschiebbaren Reiter (56) ausgebildeten Anschlag trägt, der die Bewegung des Werkzeugs (14) gegenüber der Fußplatte (20) begrenzt.

9. Handwerkzeugmaschine nach Anspruch 8, dadurch gekennzeichnet, daß die Schiene (30) mit einer Rasteinrichtung (67) versehen ist, in die eine ausrückbare, im Reiter (56) angeordnete Gegenraste (68) eingreift.

10. Handwerkzeugmaschine nach Anspruch 9, dadurch gekennzeichnet, daß die Rasteinrichtung (67) ein insbesondere sägezahnähnliches Profil mit zur Werkzeugzustellrichtung senkrechten Berührflächen aufweist.

11. Handwerkzeugmaschine nach einem der Ansprüche 1 bis 10, dadurch gekennzeichnet, daß eine Anschlagschulter in einer Ausformung der Schiene (30) in radialer Richtung in bezug auf das Zentrum ihres Krümmungsradius besteht.

12. Handwerkzeugmaschine nach einem der vorhergehenden Ansprüche, dadurch gekennzeichnet, daß die Schiene (30) an ihrem der Fußplatte (20) abgewandten Ende einen vorzugsweise hakenförmigen Endanschlag (31) hat.

13. Handwerkzeugmaschine nach mindestens einem der vorhergehenden Ansprüche, dadurch gekennzeichnet, daß sie eine zweite, unabhängig vom ersten Sperrmittel (Sperrklinke 40) zu betätigende Sperrvorrichtung (Sperrschieber 44) aufweist, die in die der Zustellrichtung entgegengesetzte Richtung wirkt und das vollständige Wegschwenken der Fußplatte (20) von der Haube (16) verhindert.

14. Handwerkzeugmaschine nach Anspruch 13, dadurch gekennzeichnet, daß die zweite Sperrvorrichtung (Sperrschieber 44) nur mit einem Schlüssel betätigbar ist.

15. Handwerkzeugmaschine nach Anspruch 14, dadurch gekennzeichnet, daß der Schlüssel gleichzeitig zum Werkzeugwechsel verwendbar ist.

16. Handwerkzeugmaschine nach einem der vorhergehenden Ansprüche, dadurch gekennzeichnet, daß die Fußplatte (20) mit Fahrrollen (24) zum Verfahren auf der zu bearbeitenden Werkstückoberfläche ausgerüstet ist.

FIG. 1

# FIG. 2

FIG. 3

FIG. 4

FIG. 5

FIG. 6

FIG. 7